# EUROPEAN PATENT APPLICATION

(11) **EP 4 675 994 A1**
(43) Date of publication of application: **07.01.2026**
(21) Application number: 23930050.2
(22) Date of filing: 06.12.2023
(51) Int. Cl.: H04L 45/16

(54) **MULTICAST METHOD AND DEVICE IN SEGMENT ROUTING LABEL NETWORK, AND MEDIUM**

(30) Priority: 27.03.2023 CN 202310339659
(71) Applicant: ZTE CORPORATION, Shenzhen, Guangdong 518057 (CN)
(72) Inventor: LIN, Zhi, Shenzhen, Guangdong 518057 (CN)
(74) Representative: Canzler & Bergmeier Patentanwälte Partnerschaft mbB
(86) International application number: PCT/CN2023/136866
(87) International publication number: WO 2024/198484

(57) **Abstract**

The present application belongs to the technical field of communications. Disclosed are a multicast method and device in a segment routing label network, and a medium. The method comprises: at an ingress node, acquiring at least one multicast segment list, the multicast segment list being determined by means of a topology relationship between nodes in a segment routing label network, wherein one multicast segment list corresponds to one independent downstream sub-tree of the ingress node, elements in the multicast segment list correspond to nodes in the independent downstream sub-tree, and the elements in the multicast segment list are represented by a multicast segment identifier forwarding structure; receiving multicast traffic and encapsulating in the multicast traffic the multicast segment list; and sending the multicast traffic to a node indicated by the outermost multicast segment identifier forwarding structure in the multicast segment list, such that the node forwards the multicast traffic on the basis of the multicast segment identifier forwarding structure of the multicast segment list.

## Description

### CROSS-REFERENCE TO RELATED APPLICATIONS

The present application claims the priority of Chinese patent application No. 202310339659.9 filed on March 27, 2023, the entire contents of which are incorporated herein by reference.

### TECHNICAL FIELD

The present disclosure relates to the field of communications, and in particular, to a multicast method in a segment routing label network, a multicast device in a segment routing label network, and a computer-readable storage medium.

### BACKGROUND

Segment routing (SR) is gradually replacing the original label protocol due to its obvious advantages, and is widely applied in unicast forwarding. However, the existing technology of segment routing for multicast point-to-multipoint forwarding is not perfect. For example, the tree segment ID (Tree SID) proposed in some technologies requires each node on a point-to-multipoint forwarding path to acquire forwarding information from a controller, or requires manually configuring the forwarding information, and maintaining a forwarding state locally for each piece of traffic, which adds a burden to the controller. Further, to issue forwarding information to each node on the point-to-multipoint forwarding path, the controller needs to be connected to each network boundary node and intermediate forwarding node, while the manual configuration involves a heavy workload and is prone to errors, and requires the intermediate node to maintain the forwarding state of each piece of traffic, which violates the original design purpose of segment routing.

### SUMMARY

A main object of the present disclosure is to provide a multicast method in a segment routing label network, a multicast device in a segment routing label network, and a computer-readable storage medium, which aim to solve the technical problem that it is difficult to implement segment routing-based multicast traffic forwarding in a segment routing label network in the existing art.

To achieve the above object, the present disclosure provides a multicast method in a segment routing label network, wherein the method is applied to an ingress node of the segment routing label network, and the method includes:
acquiring at least one multicast segment list determined by a topology relationship between nodes in the segment routing label network, wherein one multicast segment list corresponds to one independent downstream subtree of the ingress node, elements in the multicast segment list correspond to nodes in the independent downstream subtree, and the elements in the multicast segment list are represented by a multicast segment ID forwarding structure;
receiving multicast traffic and encapsulating the multicast segment list in the multicast traffic; and
sending the multicast traffic to a node indicated by an outermost multicast segment ID forwarding structure in the multicast segment list, so that the node forwards the multicast traffic based on the multicast segment ID forwarding structure in the multicast segment list.

To achieve the above object, the present disclosure provides a multicast method in a segment routing label network, wherein the method is applied to a non-ingress node of the segment routing label network, and the method includes:
receiving and parsing a multicast segment list encapsulated in multicast traffic, and determining an outermost multicast segment ID forwarding structure in the multicast segment list, wherein the outermost multicast segment ID forwarding structure includes an outermost multicast segment ID; and
under the condition that the outermost multicast segment ID is matched with the multicast segment ID of a current node, generating a multicast segment sub-list of an independent downstream subtree of the current node based on the multicast segment ID forwarding structure in the multicast segment list, and encapsulating the multicast segment sub-list in the multicast traffic to be sent to a node indicated by the outermost multicast segment ID in the multicast segment sub-list;
wherein one multicast segment sub-list corresponds to one independent downstream subtree of the current node, elements in the multicast segment sub-list correspond to nodes in the independent downstream subtree, and the elements in the multicast segment sub-list are represented by a multicast segment ID forwarding structure.

The present disclosure further provides a multicast device in a segment routing label network, including: a memory, a processor, and a computer program stored on the memory and executable by the processor, wherein the computer program, when executed by the processor, causes operations of the multicast method in a segment routing label network as described above to be implemented.

The present disclosure further provides a computer-readable storage medium having a computer program stored thereon which, when executed by a processor, causes operations of the multicast method in a segment routing label network as described above to be implemented.

### BRIEF DESCRIPTION OF DRAWINGS

FIG. 1 is a schematic flowchart of an embodiment of a multicast method in a segment routing label network according to an embodiment of the present disclosure;
FIG. 2 is a schematic network topology in an embodiment of a multicast method in a segment routing label network according to an embodiment of the present disclosure;
FIG. 3 is a schematic diagram of a multicast segment ID forwarding structure in an embodiment of a multicast method in a segment routing label network according to an embodiment of the present disclosure;
FIG. 4 is a schematic diagram of a multicast segment list encapsulated when an ingress node sends multicast traffic to one independent downstream subtree in an embodiment of a multicast method in a segment routing label network according to an embodiment of the present disclosure;
FIG. 5 is a schematic flowchart of another embodiment of a multicast method in a segment routing label network according to an embodiment of the present disclosure;
FIG. 6 is a schematic view of a multicast segment list encapsulated in multicast traffic received by a non-ingress node in an embodiment of a multicast method in a segment routing label network according to an embodiment of the present disclosure;
FIG. 7 is a schematic diagram of one new multicast segment list generated in an embodiment of a multicast method in a segment routing label network according to an embodiment of the present disclosure;
FIG. 8 is a schematic diagram of another new multicast segment list generated in an embodiment of a multicast method in a segment routing label network according to an embodiment of the present disclosure;
FIG. 9 is a schematic diagram of another new multicast segment list generated in an embodiment of a multicast method in a segment routing label network according to an embodiment of the present disclosure; and
FIG. 10 is a schematic structural diagram of an operating device of a hardware operating environment according to an embodiment of the present disclosure.

The implementation, functional features and advantages of the objects of the present disclosure will be further explained in conjunction with the embodiments with reference to the accompanying drawings.

### DETAIL DESCRIPTION OF EMBODIMENTS

It will be appreciated that the specific embodiments described herein are merely for illustration of the present disclosure and are not intended to limit the present disclosure.

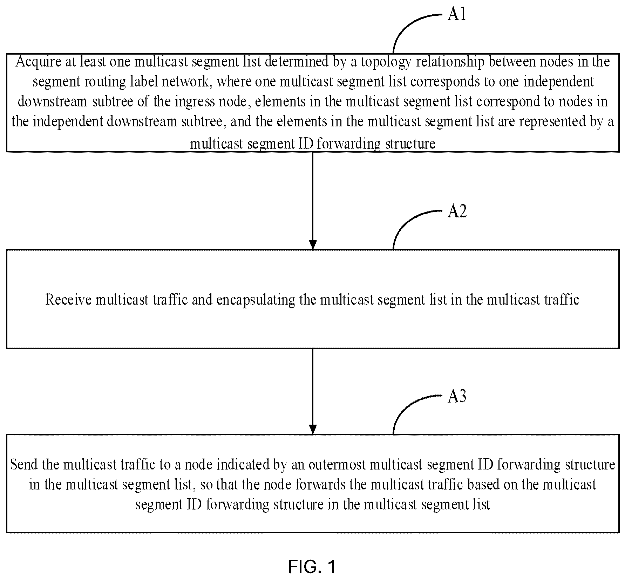

An embodiment of the present disclosure provides a multicast method in a segment routing label network. Referring to FIG. 1, in an embodiment of a multicast method in a segment routing label network, the method is applied to an ingress node of the segment routing label network, and includes the following operations A1 to A3.

At operation A1, acquiring at least one multicast segment list determined by a topology relationship between nodes in the segment routing label network, where one multicast segment list corresponds to one independent downstream subtree of the ingress node, elements in the multicast segment list correspond to nodes in the independent downstream subtree, and the elements in the multicast segment list are represented by a multicast segment ID forwarding structure.

In this embodiment, the segment routing label network includes one ingress node, one or more downstream intermediate nodes, and one or more end receiving nodes.

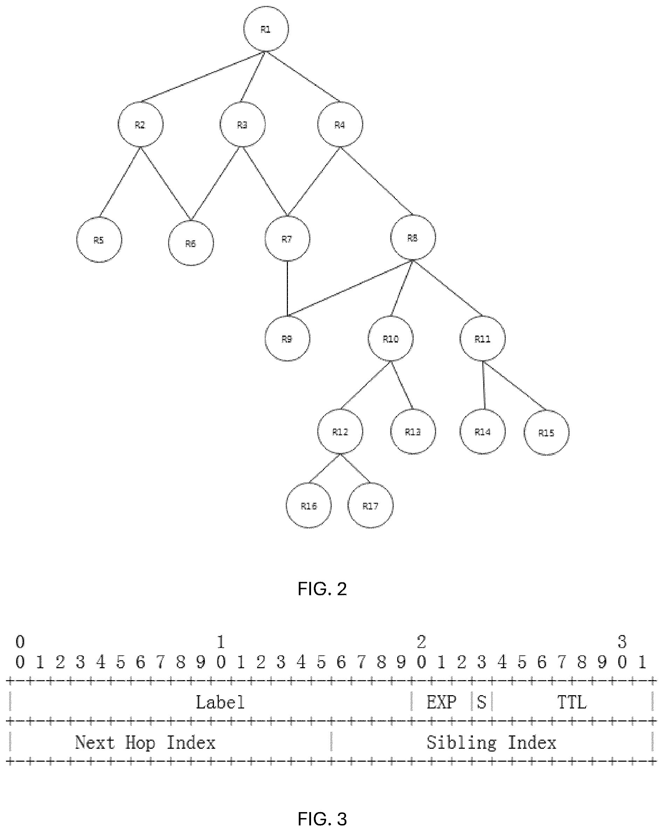

Referring to FIG. 2, in one embodiment, for a certain piece of multicast traffic, the segment routing label network includes 17 network nodes, i.e., R1 to R17. Taking the network topology shown in FIG. 2 as an example, R1 is a root node of the network, i.e., an ingress node; and R2, R3, R4, R7, R8, R10, R11 and R12 are intermediate nodes. In some forwarding path selections of multicast traffic, some intermediate nodes on a forwarding path need to perform forwarding, while other intermediate nodes on the forwarding path do not need to perform forwarding. The specific forwarding states of the intermediate nodes during forwarding are described in detail below, and are not detailed here. R5, R6, R9, R13, R14, R15, R16 and R17 are leaf nodes of the network, i.e., receiving nodes.

In this embodiment, the ingress node may acquire at least one multicast segment list determined by a topology relationship between nodes in the segment routing label network.

Illustratively, acquiring the at least one multicast segment list includes:
receiving the at least one multicast segment list generated and issued by a controller based on the topology relationship between the nodes of the segment routing label network; or
generating the at least one multicast segment list based on the topology relationship between the nodes of the segment routing label network.

In one embodiment, to acquire at least one multicast segment list, a controller of the segment routing label network may generate the at least one multicast segment list based on the topology relationship between the nodes of the segment routing label network, and the ingress node receives the at least one multicast segment list issued from the controller; or the ingress node may directly generate the at least one multicast segment list based on the topology relationship between the nodes of the segment routing label network. In this embodiment, how to generate the multicast segment list based on the topology relationship by the controller or the ingress node is not limited.

In this embodiment, one multicast segment list corresponds to one independent downstream subtree of the ingress node, elements in the multicast segment list correspond to nodes in the independent downstream subtree, and the elements in the multicast segment list are represented by a multicast segment ID forwarding structure.

Referring to FIG. 2, in one embodiment, R1 is an ingress node; R2, R3, R4, R7, R8, R10, R11 and R12 are intermediate nodes; and R5, R6, R9, R13, R14, R15, R16 and R17 are receiving nodes. In such topology distribution of the ingress node, the intermediate nodes and the receiving nodes, the ingress node R1 has two independent downstream subtrees, where a first subtree takes the intermediate node R2 as the root, and reaches the receiving nodes R5 and R6; and a second subtree takes the intermediate node R8 as the root, and reaches the receiving nodes R9, R13, R14, R15, R16 and R17. The ingress node R1 will obtain two multicast segment lists respectively corresponding to the subtrees.

Accordingly, one multicast segment list corresponds to one independent downstream subtree of the ingress node, and in the point (one ingress node) to multipoint (multiple receiving nodes) multicast, the two independent downstream subtrees correspond to two multicast segment lists. Elements in each multicast segment list correspond to nodes in the independent downstream subtree. Nodes of the first subtree include the intermediate node R2 and receiving nodes such as R5; and nodes of the second subtree include intermediate nodes such as R8 and R10, and receiving nodes such as R9 and R17.

In this embodiment, there is further proposed a new multicast segment ID forwarding structure, which is used as an element in the multicast segment list to represent a node in the independent downstream subtree and indicate how to perform subsequent forwarding when traffic reaches the node.

Illustratively, the multicast segment ID forwarding structure includes a multicast segment ID, and a next hop index and a sibling index of a node indicated by the multicast segment ID.

The multicast segment ID is configured to indicate a unique network node in the segment routing label network.

The next hop index is configured to indicate a position of the multicast segment ID forwarding structure in the multicast segment list corresponding to the first downstream node of the nodes indicated by the multicast segment ID.

The sibling index is configured to indicate a position of the multicast segment ID forwarding structure in the multicast segment list corresponding to a sibling node having the same parent node as the node indicated by the multicast segment ID.

The multicast segment ID forwarding structure is configured to instruct a non-ingress node in the segment routing label network to forward the received traffic.

In this embodiment, the proposed new multicast segment ID forwarding structure includes a multicast segment ID, and a next hop index and a sibling index of the node.

On the basis of a prefix segment ID and a link segment ID originally allocated for segment routing unicast forwarding, each node in the segment routing label network is further allocated with and advertises a new multicast segment ID. The multicast segment ID is a type of prefix segment ID which is unique in the network and can uniquely determine one network node.

Referring to FIG. 3, in one embodiment, first 32 bits include a Label field in the multicast segment ID for indicating a network node, an experimental use (EXP) field, a bottom of stack (S) field, and a time to live (TTL) field. The next hop index field (Next Hop Index) is configured to indicate a position of the multicast segment ID forwarding structure in the multicast segment list corresponding to the first downstream node of the node on the point-to-multipoint forwarding path; The sibling index (Sibling Index) field is configured to indicate a position of the multicast segment ID forwarding structure in the multicast segment list corresponding to a sibling node having the same parent node as the node on the point-to-multipoint forwarding path. The first 32 bits have the same label structure as standard multi-protocol label switching (MPLS). If an outermost label of the traffic received by an intermediate node is not the multicast segment ID locally allocated, a segment routing unicast mode is adopted. Such a forwarding structure has good backward compatibility, and when network nodes not supporting the present disclosure are present in the segment routing label network, these nodes can still send the traffic to the node indicated by the outermost segment ID in a unicast mode.

The point-to-multipoint traffic forwarding path in the segment routing label network is described by a multicast segment list composed of one or more multicast segment ID forwarding structures. For convenience of expression, the multicast segment ID forwarding structure is directly represented by three key fields, i.e., the multicast segment ID, NI (Next Hop Index) and SI (Sibling Index), and Ri_MN represents the multicast segment ID of an i^{th} node Ri.

The ingress node of the segment routing label network acquires a multicast segment list indicating point-to-multipoint forwarding of the multicast traffic. Each element in the multicast segment list is a new multicast segment ID forwarding structure, and each multicast segment ID forwarding structure represents a key node on the point-to-multipoint forwarding path, such as a branch node, a leaf node, a node influencing path selection, and the like. For one piece of multicast traffic, the ingress node may receive one or more multicast segment lists, each of which corresponds to one independent downstream subtree. The multicast traffic is replicated into one or more copies at the ingress node, and each copy of the multicast traffic is compressed into one multicast segment list and sent to a node indicated by the outermost multicast segment ID in the multicast segment list.

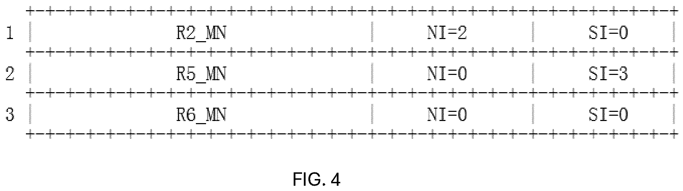

In one embodiment, the ingress node R1 acquires a multicast segment list as shown in FIG. 4, where the multicast segment list of a first independent downstream subtree of the ingress node R1 includes 3 multicast segment ID forwarding structures, i.e., a multicast segment ID forwarding structure [R2_MN, NI=2, SI=0] representing node R2 at position 1 in the multicast segment list, a multicast segment ID forwarding structure [R5_MN, NI=0, SI=3] representing node R5 at position 2 in the multicast segment list, and a multicast segment ID forwarding structure [R6_MN, NI=0, SI=0] representing node R6 at position 3 in the multicast segment list. Illustratively, in this embodiment, the multicast segment list may be indexed from 1 or 0, which is not mandatorily required.

For the multicast segment ID forwarding structure [R2_MN, NI=2, SI=0], R2_MN is the multicast segment ID of node R2, NI=2 indicates that the multicast segment ID forwarding structure [R5_MN, NI=0, SI=3] corresponding to the first downstream node of node R2 (i.e., node R5) is at position 2 in the multicast segment list, and SI=0 indicates that the multicast segment ID forwarding structure corresponding to a sibling node having the same parent node as node R2 is at position 0 in the multicast segment list, which means that there is no sibling node having the same parent node as node R2.

For the multicast segment ID forwarding structure [R5_MN, NI=0, SI=3], R5_MN is the multicast segment ID of node R5, NI=0 indicates that the multicast segment ID forwarding structure corresponding to the first downstream node of node R5 is at position 0 in the multicast segment list, which means that node R5 is a leaf node having no downstream node, and SI=3 indicates that the multicast segment ID forwarding structure corresponding to a sibling node (node R6) having the same parent node (node R2) as node R5 is at position 3 in the multicast segment list. For the meanings of the fields in the multicast segment ID forwarding structure [R6_MN, NI=0, SI=0], reference may be made to the interpretations of node R2 and node R5, which are not repeated here.

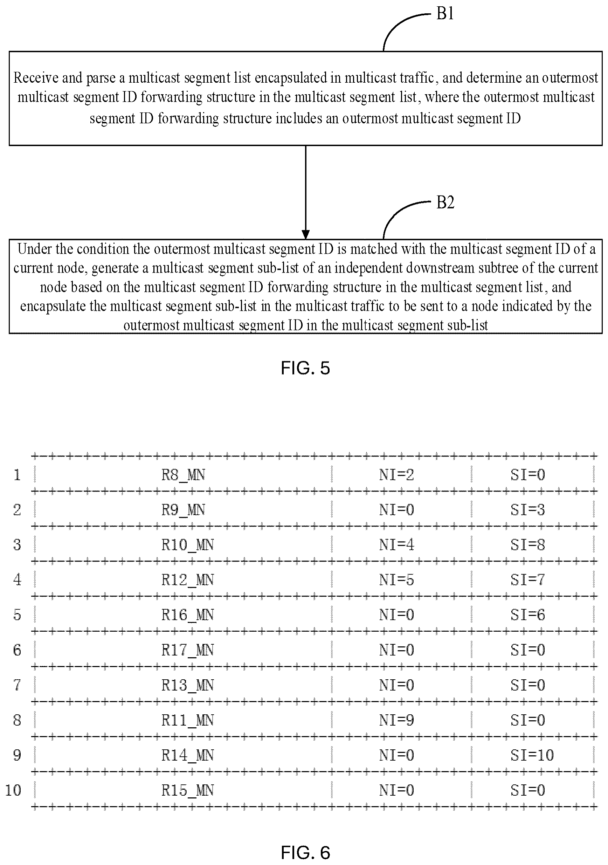

In one embodiment, the ingress node R1 acquires another multicast segment list as shown in FIG. 6, where the multicast segment list of a second independent downstream subtree of the ingress node R1 includes 10 multicast segment ID forwarding structures. The meaning of each field in the multicast segment ID forwarding structure corresponding to each list element may refer to that in the multicast segment list of FIG. 4, which is not repeated here.

At operation A2, receiving multicast traffic and encapsulating the multicast segment list in the multicast traffic.

At operation A3, sending the multicast traffic to a node indicated by an outermost multicast segment ID forwarding structure in the multicast segment list, so that the node forwards the multicast traffic based on the multicast segment ID forwarding structure in the multicast segment list.

After acquiring one or more multicast segment lists, the ingress node duplicates one copy of multicast traffic for each list and encapsulates the multicast segment list, so that the multicast traffic is sent to a node indicated by an outermost multicast segment ID forwarding structure in the multicast segment list, and the node forwards the received multicast traffic based on the multicast segment ID forwarding structure in the multicast segment list, thereby implementing point-to-multipoint multicast forwarding.

Sending to the node indicated by an outermost multicast segment ID forwarding structure in the multicast segment list means sending to a node indicated by the outermost multicast segment ID forwarding structure in the multicast segment list.

In one embodiment, the ingress node R1 acquires the two multicast segment lists shown in FIGs. 4 and 6, and node R1 duplicates the received multicast traffic, and respectively encapsulates each copy into one multicast segment list, to send the multicast traffic to a node indicated by an outermost multicast segment ID forwarding structure in the corresponding multicast segment list. Illustratively, the traffic of the multicast segment list shown in FIG. 4 is encapsulated and sent to node R2, the traffic of the multicast segment list shown in FIG. 6 is encapsulated and sent to node R8, and nodes R2 and R8 further forward the multicast traffic based on the received multicast segment ID forwarding structures in the multicast segment lists.

In this embodiment, compared with the method provided in the current segment routing point-to-multipoint forwarding technology, instead of being connected to each intermediate node on the point-to-multipoint forwarding path and issuing a forwarding state to each intermediate node, the controller only needs to be connected to the ingress node and issue a multicast segment list corresponding to an independent downstream subtree; and instead of maintaining each piece of point-to-multipoint path forwarding state information at the intermediate node on the forwarding path, the multicast segment list encapsulated in the traffic can instruct the subsequent forwarding of a non-ingress node. The multicast segment list carries complete information of the point-to-multipoint forwarding path, and the multicast segment ID forwarding structure as a list element provides enough multicast forwarding information for the intermediate node. Finally, segment routing-based multicast traffic forwarding is realized in the segment routing label network.

An embodiment of the present disclosure provides a multicast method in a segment routing label network. Referring to FIG. 5, in another embodiment of a multicast method in a segment routing label network, the method is applied to a non-ingress node of the segment routing label network, and includes the following operations B1 to B2.

At operation B1, receiving and parsing a multicast segment list encapsulated in multicast traffic, and determining an outermost multicast segment ID forwarding structure in the multicast segment list, where the outermost multicast segment ID forwarding structure includes an outermost multicast segment ID.

In this embodiment, the non-ingress node in the segment routing label network refers to a node other than the ingress node. Referring to FIG. 2, in one embodiment, R1 is an ingress node; R2, R3, R4, R7, R8, R10, R11 and R12 are intermediate nodes; and receiving nodes R5, R6, R9, R13, R14, R15, R16 and R17 are non-ingress nodes.

In this embodiment, the non-ingress node receives and parses a multicast segment list encapsulated in the multicast traffic from a previous node, where the previous node of the non-ingress node may be the ingress node or a previous non-ingress node. Referring to FIG. 2, taking the current non-ingress node being node R2 as an example, the previous node is the ingress node R1; taking the current non-ingress node being node R10 as an example, the previous node is the non-ingress node R8; and taking the current non-ingress node being node R14 as an example, the previous node is the non-ingress node R11.

After the multicast segment list encapsulated in the multicast traffic is received and parsed, an outermost multicast segment ID forwarding structure in the multicast segment list is determined, where the outermost multicast segment ID forwarding structure includes an outermost multicast segment ID.

Illustratively, the multicast segment ID forwarding structure includes a multicast segment ID, and a next hop index and a sibling index of a node indicated by the multicast segment ID.

The multicast segment ID is configured to indicate a unique network node in the segment routing label network.

The next hop index is configured to indicate a position of the multicast segment ID forwarding structure in the multicast segment list corresponding to the first downstream node of the nodes indicated by the multicast segment ID.

The sibling index is configured to indicate a position of the multicast segment ID forwarding structure in the multicast segment list corresponding to a sibling node having the same parent node as the node indicated by the multicast segment ID.

The multicast segment ID forwarding structure may refer to the description in the embodiments related to the ingress node, which is not described in detail here.

At operation B2, under the condition the outermost multicast segment ID is matched with the multicast segment ID of a current node, generating a multicast segment sub-list of an independent downstream subtree of the current node based on the multicast segment ID forwarding structure in the multicast segment list, and encapsulating the multicast segment sub-list in the multicast traffic to be sent to a node indicated by the outermost multicast segment ID in the multicast segment sub-list.

One multicast segment sub-list corresponds to one independent downstream subtree of the current node, elements in the multicast segment sub-list correspond to nodes in the independent downstream subtree, and the elements in the multicast segment sub-list are represented by a multicast segment ID forwarding structure.

When the outermost multicast segment ID of the received multicast segment list is matched with the multicast segment ID of the current node, it indicates that the current node needs to perform multicast forwarding of the received traffic based on the indication of the multicast segment ID forwarding structure. At this time, a multicast segment sub-list of an independent downstream subtree of the current node is generated from the received multicast segment list based on the multicast segment ID forwarding structure, and the multicast segment sub-list is encapsulated in the multicast traffic to be sent to a node indicated by the outermost multicast segment ID in the multicast segment sub-list.

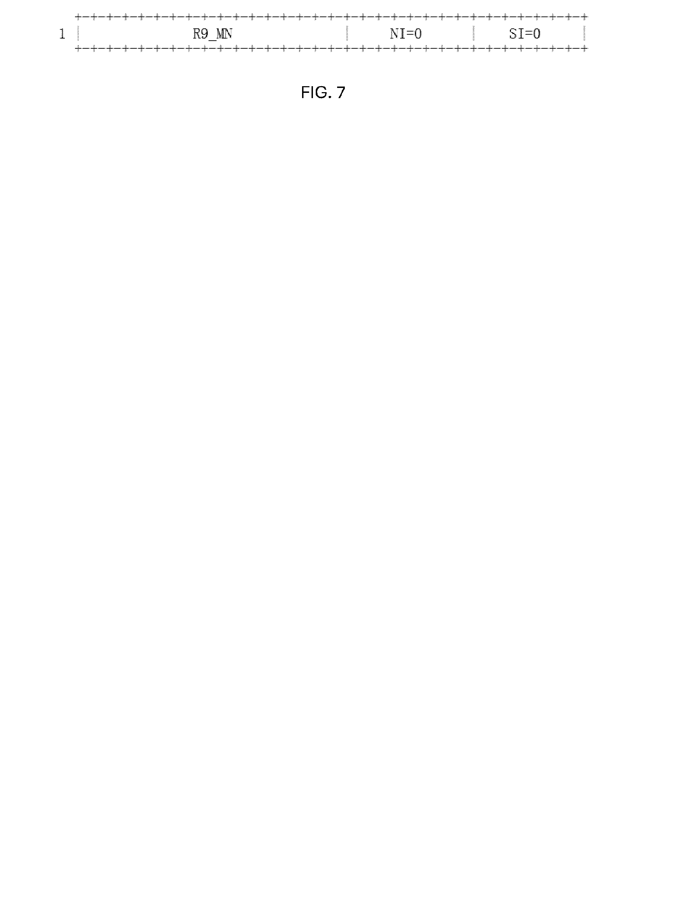

In one embodiment, after receiving the multicast segment list as shown in FIG. 6 encapsulated in the multicast traffic, the non-ingress node R8 determines that the outermost multicast segment ID is the same as the multicast segment ID of node R8 itself, and parses the received multicast segment list based on the indication of the multicast segment ID forwarding structure to obtain multicast segment sub-lists of three independent downstream subtrees, where the generated multicast segment sub-lists are shown in FIGs. 7 to 9, respectively. The outermost multicast segment ID of a first multicast segment sub-list indicates node R9, the outermost multicast segment ID of a second multicast segment sub-list indicates node R10, and the outermost multicast segment ID of a third multicast segment sub-list indicates node R11. Therefore, the non-ingress node R8 duplicates the multicast traffic to encapsulate the multicast segment sub-list corresponding to each independent downstream subtree, and accordingly sends the multicast traffic to the node indicated by the outermost multicast segment ID in the multicast segment sub-list, that is, to a root node of the downstream independent subtree of the current node.

Illustratively, after determining the outermost multicast segment ID forwarding structure in the multicast segment list, the method further includes:
under the condition that the outermost multicast segment ID is not matched with the multicast segment ID of the current node, performing unicast forwarding of the multicast traffic on the node indicated by the outermost multicast segment ID.

Firstly, it is determined whether the outermost multicast segment ID is the multicast segment ID of the current node, if the outermost multicast segment ID is not the multicast segment ID of the current node, forwarding to the node indicated by the outermost multicast segment ID is performed in a unicast mode.

In one embodiment, after receiving the multicast segment list as shown in FIG. 6 encapsulated in the multicast traffic, the non-ingress node R4 determines that the node indicated by the outermost multicast segment ID is R8 instead of the current node R4, and thus forwards the traffic to node R8 in a unicast mode.

If the outermost multicast segment ID of the multicast traffic received by the non-ingress node is not a multicast segment ID locally allocated, a segment routing unicast mode is adopted. Therefore, the multicast segment list obtained at the ingress node does not need to include every node on the point-to-multipoint forwarding path. Referring to FIG. 2, node R4 is on the shortest unicast path from node R1 to node R8 and no duplicated traffic is sent to multiple downstream nodes, so the multicast segment list may not contain node R4. When node R4 receives the traffic and determines that the outermost multicast segment ID indicates node R8 instead of a local node, unicast forwarding of the traffic to node R8 is performed. In this manner, the length of the multicast segment list, as well as the stack depth, can be reduced. In addition, if there are other paths available between node R1 and node R8 besides node R4, and the node R4 is specified in the multicast segment list, then the traffic may be load-shared over multiple paths, or another path may be automatically selected when one of the paths fails. In addition, a node which does not support the multicast method of the present disclosure may exist on the multicast traffic point-to-multipoint forwarding path, and that node will not become a node indicated by the multicast segment ID forwarding structure in the multicast segment list, but can still be used as an intermediate node for unicast forwarding of the multicast traffic to the node indicated by the outermost multicast segment ID forwarding structure in the multicast segment list.

Illustratively, before generating the multicast segment sub-list of the independent downstream subtree of the current node based on the multicast segment ID forwarding structure in the multicast segment list, the method includes:
under the condition that the next hop index of the outermost multicast segment ID forwarding structure is determined to be a preset value, uploading the multicast traffic to a multicast service for processing; and
under the condition that the next hop index of the outermost multicast segment ID forwarding structure is determined not to be a preset value, generating the multicast segment sub-list of the independent downstream subtree of the current node based on the next hop index and the sibling index of the multicast segment ID forwarding structure in the multicast segment list encapsulated in the multicast traffic.

In this embodiment, before generating the multicast segment sub-list of the independent downstream subtree of the current node based on the multicast segment ID forwarding structure in the multicast segment list, it is determined whether the current node is a receiving node. In one implementation, the preset value is set to 0.

If the next hop index of the outermost multicast segment ID forwarding structure is a preset value, it is determined that the current node is a receiving node, and the current node has no independent downstream subtree, so that there is no need to further generate a multicast segment sub-list of an independent downstream subtree of the current node, and the received multicast traffic is directly uploaded to a multicast service for processing.

If the next hop index of the outermost multicast segment ID forwarding structure is not the preset value, a multicast segment sub-list of an independent downstream subtree of the current node is further generated, and multicast forwarding of the received multicast traffic is continued.

An embodiment of the present disclosure provides a multicast method in a segment routing label network, and in another embodiment of a multicast method in a segment routing label network, generating the multicast segment sub-list of the independent downstream subtree of the current node based on the next hop index and the sibling index of the multicast segment ID forwarding structure in the multicast segment list encapsulated in the multicast traffic includes:
determining a first multicast segment ID forwarding structure indicated by the next hop index of the outermost multicast segment ID forwarding structure, and taking a node indicated by the first multicast segment ID forwarding structure as a root node of a first independent downstream subtree of the current node;
determining a second multicast segment ID forwarding structure indicated by the sibling index of the multicast segment ID forwarding structure of the root node, and taking a node indicated by the second multicast segment ID forwarding structure as a root node of a next independent downstream subtree of the current node, until the sibling index of the multicast segment ID forwarding structure of the root node is a preset value; and
determining that the multicast segment ID forwarding structure between adjacent root nodes in the multicast segment list is a multicast segment sub-list of an independent downstream subtree to which a previous root node belongs, and updating the next hop index and the sibling index of each multicast segment ID forwarding structure in the multicast segment sub-list.

In this embodiment, while generating the multicast segment sub-list of the independent downstream subtree of the current node based on the multicast segment ID forwarding structure in the multicast segment list, the multicast segment sub-list of the independent downstream subtree of the current node is generated based on the multicast segment ID, the next hop index and the sibling index in the multicast segment ID forwarding structure corresponding to the multicast segment list.

The multicast segment ID forwarding structure corresponding to the node of the independent downstream subtree of the current node is duplicated to generate a multicast segment list of a new independent downstream subtree (a multicast segment sub-list of the multicast segment list received by the current node), and the next hop index and the sibling index of the multicast segment ID forwarding structure corresponding to each node in the segment list are updated to ensure that the next hop index and the sibling index indicate the corresponding node correctly in the new segment list.

In one embodiment, the outermost multicast segment ID of the new segment list is a root node of the independent downstream subtree, and the sibling index SI of the root node is updated to 0.

If the original next hop index NI of the root node is 0, it indicates that the independent downstream subtree has only one node, i.e., a root node, and the next hop index NI of the root node is updated to 0.

If the original next hop index NI of the root node is not 0, it indicates that the independent downstream subtree has other downstream nodes besides the root node, and the next hop index NI of the root node is updated to 2.

A position of a root node in the original segment list, subtree_root_position, is an original next hop index NI-1 of the root node, the next hop index NI=NI-subtree_root_position+1 in the multicast segment ID forwarding structure of each downstream node of the root node is updated, the sibling index SI=SI-subtree_root_position+1 in the multicast segment ID forwarding structure of each downstream node of the root node is updated, and when a calculation result of NI or SI is 0 or a negative, it is updated to 0. The multicast traffic is duplicated to encapsulate a new multicast segment list, and sent to the node indicated by the outermost multicast segment ID of the segment list.

In one embodiment, the non-ingress node R8 receives the multicast segment list as shown in FIG. 6 encapsulated in the multicast traffic. The outermost multicast segment ID is matched with the multicast segment ID of the current node R8, so that node R8 parses the next hop index NI=2 in the outermost multicast segment ID forwarding structure. It is determined that node R8 is not a leaf node, and node R8 needs to generate a multicast segment sub-list corresponding to an independent downstream subtree based on the multicast segment ID forwarding structure in the multicast segment list.

Node R8 parses the next hop index NI=2 in the outermost multicast segment ID forwarding structure, and indicates a position of a root node of a first downstream subtree of node R8 in the original multicast segment list. Node R8 parses the sibling index SI=3 of the multicast segment ID forwarding structure [R9_MN, NI=0, SI=3] corresponding to the root node of the first downstream subtree, and indicates a position of a root node of a second downstream subtree of node R8 in the original multicast segment list. Node R8 parses the sibling index SI=8 of the multicast segment ID forwarding structure [R10_MN, NI=4, SI=8] corresponding to the root node of the second downstream subtree, and indicates a position of a root node of a third downstream subtree of node R8 in the original multicast segment list, and the multicast segment ID forwarding structure [R11_MN, NI=9, SI=0] corresponding to the root node of the third downstream subtree has the sibling index SI=0.

The node of the first independent downstream subtree is a node indicated by a multicast segment ID forwarding structure between the root node of the first downstream subtree and the root node of the second downstream subtree in the original multicast segment list, and based on the previous parsing, is a node indicated by a multicast segment ID forwarding structure at position of 2 in the original multicast segment list. The node of the second independent downstream subtree is a node indicated by a multicast segment ID forwarding structure between the root node of the second downstream subtree and the root node of the third downstream subtree in the original multicast segment list, and based on the previous parsing, is a node indicated by a multicast segment ID forwarding structure between position 3 and position 7 in the original multicast segment list. The multicast segment ID forwarding structure corresponding to the root node of the third independent downstream subtree having the sibling index SI=0 indicates that the third independent downstream subtree is the last independent subtree, and the node of the third subtree is a node indicated by a multicast segment ID forwarding structure between position 8 to a last position in the original multicast segment list.

The first independent downstream subtree has only a root node, and for the multicast segment ID forwarding structure [R9_MN, NI=0, SI=3] in the original multicast segment list, the sibling index SI of the root node is updated to 0, the next hop index NI of the root node is updated and set to 0 if the original NI is 0, and the updated multicast segment sub-list is as shown in FIG. 7.

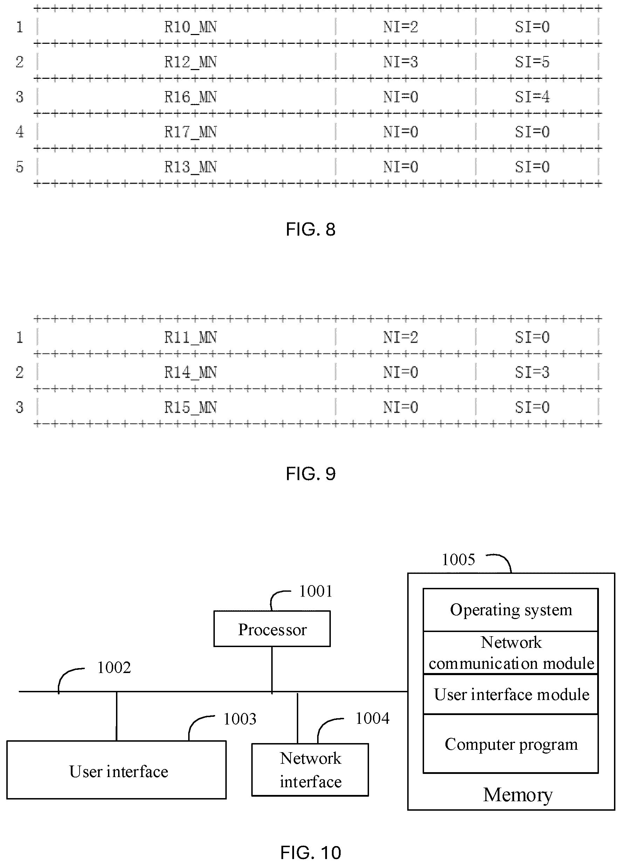

For the multicast segment ID forwarding structure [R10_MN, NI=4, SI=8] in the original multicast segment list corresponding to the root node of the second independent downstream subtree, the sibling index SI of the root node is updated to 0, the next hop index NI of the root node is updated and set to 2 if the original NI is not 0, and the position of the root node in the original multicast segment list, subtree_root_position, is obtained by decreasing an original next hop index of the root node by 1. In this example, the position of the root node in the original multicast segment list is 4-1=3. The next hop indexes and the sibling indexes in the multicast segment ID forwarding structures of other nodes on the second independent downstream subtree are updated. In the new multicast segment sub-list, the multicast segment ID forwarding structure [R12_MN, NI=5, SI=7] at position 4 in the original multicast segment list has NI=NI-subtree_root_position+1=5-3+1=3, and SI=SI-subtree_root_position+1=7-3+1=5. In the new multicast segment sub-list, the multicast segment ID forwarding structure [R16_MN, NI=0, SI=6] at position 5 in the original multicast segment list has NI=NI-subtree_root_position+1=0-3+1=-2,where NI=0 if the calculation result is less than 0, and SI=SI-subtree_root_position+1=6-3+1=4. The next hop index and the sibling index in the multicast segment ID forwarding structure of each node on the second independent downstream subtree are updated, and the updated multicast segment sub-list is as shown in FIG. 8.

FIG. 9 shows a multicast segment sub-list generated after the multicast segment ID forwarding structure corresponding to a node on the third independent downstream subtree is updated. The specific updating process may refer to that of the multicast segment sub-list of the second independent downstream subtree, which is not repeated here.

To this end, node R8 generates three multicast segment sub-lists, as shown in FIGs. 7 to 9 respectively, corresponding to three independent downstream subtrees based on the indication of the multicast segment ID forwarding structure from the multicast segment list encapsulated in the received multicast traffic as shown in FIG. 6. Node R8 replicates the multicast traffic and encapsulates one multicast segment sub-list in each copy, and sends the multicast traffic to a node indicated by an outermost multicast segment ID forwarding structure in the corresponding multicast segment sub-list. Illustratively, traffic encapsulating the multicast segment sub-list shown in FIG. 7 is sent to node R9, traffic encapsulating the multicast segment sub-list shown in FIG. 8 is sent to node R10, and traffic encapsulating the multicast segment sub-list shown in FIG. 9 is sent to node R11.

In the present disclosure, when a non-ingress node on the point-to-multipoint forwarding path receives multicast traffic encapsulated with a multicast segment list, if the node is a node indicated by an outermost multicast segment ID in the multicast segment list, a multicast segment sub-list corresponding to an independent downstream subtree of the current node is generated based on the indication of the multicast segment ID, and a multicast traffic message is sent to a root node of each independent downstream subtree of the current node, where each copy of traffic encapsulates an updated multicast segment sub-list.

Therefore, compared with the method provided in the current segment routing point-to-multipoint forwarding technology, instead of being connected to each intermediate node on the point-to-multipoint forwarding path and issuing a forwarding state to each intermediate node, the controller only needs to be connected to the ingress node and issue a multicast segment list corresponding to an independent downstream subtree; and instead of maintaining each piece of point-to-multipoint path forwarding state information at the intermediate node on the forwarding path, the multicast segment list encapsulated in the traffic can instruct the subsequent forwarding of a non-ingress node. The multicast segment list carries complete information of the point-to-multipoint forwarding path, and the multicast segment ID forwarding structure as a list element provides enough multicast forwarding information for the intermediate node. Finally, segment routing-based multicast traffic forwarding is realized in the segment routing label network.

In addition, an embodiment of the present disclosure further provides a multicast device in a segment routing label network, including: a memory, a processor, and a computer program stored on the memory and executable by the processor, where the computer program, when executed by a processor, causes operations of the multicast method in a segment routing label network as described above to be implemented.

In addition, an embodiment of the present disclosure further provides a computer-readable storage medium having a computer program stored thereon which, when executed by a processor, causes operations of the multicast method in a segment routing label network as described above to be implemented.

Referring to FIG. 10, FIG. 10 is a schematic structural diagram of an operating device of a hardware operating environment according to an embodiment of the present disclosure.

As shown in FIG. 10, the operating device may include: a processor 1001, such as a central processing unit (CPU), a communication bus 1002, a user interface 1003, a network interface 1004, and a memory 1005. The communication bus 1002 is configured to enable connective communication between these components. The user interface 1003 may include a display, and an input unit such as a keyboard, and may further include a standard wired or wireless interface. The network interface 1004 may include a standard wired or wireless interface (e.g., a Wireless-Fidelity (WI-FI) interface). The memory 1005 may be a high-speed random access memory (RAM), or a non-volatile memory (NVM), such as a disk memory. The memory 1005 may be a storage device separate from the processor 1001 as described above.

Those skilled in the art will appreciate that the configuration shown in FIG. 10 is not intended to limit the operating device, and more or fewer components than shown may be included, or some components may be combined, or a different arrangement of components may be provided.

As shown in FIG. 10, the memory 1005, as a storage medium, may include an operating system, a data storage module, a network communication module, a user interface module, and a computer program.

In the operating device shown in FIG. 10, the network interface 1004 is mainly configured for data communication with other devices; and the user interface 1003 is mainly configured for data interaction with a user. The processor 1001 and the memory 1005 in the operating device of the present disclosure may be provided in the operating device, and the operating device calls the computer program stored in the memory 1005 through the processor 1001 to execute the operations of:
acquiring at least one multicast segment list determined by a topology relationship between nodes in the segment routing label network, where one multicast segment list corresponds to one independent downstream subtree of the ingress node, elements in the multicast segment list correspond to nodes in the independent downstream subtree, and the elements in the multicast segment list are represented by a multicast segment ID forwarding structure;
receiving multicast traffic and encapsulating the multicast segment list in the multicast traffic; and
sending the multicast traffic to a node indicated by an outermost multicast segment ID forwarding structure in the multicast segment list, so that the node forwards the multicast traffic based on the multicast segment ID forwarding structure in the multicast segment list.

In one embodiment, the processor 1001 may call the computer program stored in the memory 1005 to further perform the operations of:
acquiring the at least one multicast segment list includes:
receiving the at least one multicast segment list generated and issued by a controller based on the topology relationship between the nodes of the segment routing label network; or
generating the at least one multicast segment list based on the topology relationship between the nodes of the segment routing label network.

In one embodiment, the multicast segment ID forwarding structure includes a multicast segment ID, and a next hop index and a sibling index of a node indicated by the multicast segment ID.

The multicast segment ID is configured to indicate a unique network node in the segment routing label network.

The next hop index is configured to indicate a position of the multicast segment ID forwarding structure in the multicast segment list corresponding to the first downstream node of the nodes indicated by the multicast segment ID.

The sibling index is configured to indicate a position of the multicast segment ID forwarding structure in the multicast segment list corresponding to a sibling node having the same parent node as the node indicated by the multicast segment ID.

The multicast segment ID forwarding structure is configured to instruct a non-ingress node in the segment routing label network to forward the received traffic.

In one embodiment, the processor 1001 may call the computer program stored in the memory 1005 to further perform the operations of:
receiving and parsing a multicast segment list encapsulated in multicast traffic, and determining an outermost multicast segment ID forwarding structure in the multicast segment list, where the outermost multicast segment ID forwarding structure includes an outermost multicast segment ID; and
under the condition the outermost multicast segment ID is matched with the multicast segment ID of a current node, generating a multicast segment sub-list of an independent downstream subtree of the current node based on the multicast segment ID forwarding structure in the multicast segment list, and encapsulating the multicast segment sub-list in the multicast traffic to be sent to a node indicated by the outermost multicast segment ID in the multicast segment sub-list.

One multicast segment sub-list corresponds to one independent downstream subtree of the current node, elements in the multicast segment sub-list correspond to nodes in the independent downstream subtree, and the elements in the multicast segment sub-list are represented by a multicast segment ID forwarding structure.

In one embodiment, the multicast segment ID forwarding structure includes a multicast segment ID, and a next hop index and a sibling index of a node indicated by the multicast segment ID.

The multicast segment ID is configured to indicate a unique network node in the segment routing label network.

The next hop index is configured to indicate a position of the multicast segment ID forwarding structure in the multicast segment list corresponding to the first downstream node of the nodes indicated by the multicast segment ID.

The sibling index is configured to indicate a position of the multicast segment ID forwarding structure in the multicast segment list corresponding to a sibling node having the same parent node as the node indicated by the multicast segment ID.

In one embodiment, the processor 1001 may call the computer program stored in the memory 1005 to further perform the operations of:
after determining the outermost multicast segment ID forwarding structure in the multicast segment list:
under the condition that the outermost multicast segment ID is not matched with the multicast segment ID of the current node, performing unicast forwarding of the multicast traffic on the node indicated by the outermost multicast segment ID.

In one embodiment, the processor 1001 may call the computer program stored in the memory 1005 and further perform the operations of:
before generating the multicast segment sub-list of the independent downstream subtree of the current node based on the multicast segment ID forwarding structure in the multicast segment list:
under the condition that the next hop index of the outermost multicast segment ID forwarding structure is determined to be a preset value, uploading the multicast traffic to a multicast service for processing; and
under the condition that the next hop index of the outermost multicast segment ID forwarding structure is determined not to be a preset value, generating the multicast segment sub-list of the independent downstream subtree of the current node based on the next hop index and the sibling index of the multicast segment ID forwarding structure in the multicast segment list encapsulated in the multicast traffic.

In one embodiment, the processor 1001 may call the computer program stored in the memory 1005 and further perform the operations of:
generating the multicast segment sub-list of the independent downstream subtree of the current node based on the next hop index and the sibling index of the multicast segment ID forwarding structure in the multicast segment list encapsulated in the multicast traffic, including:
determining a first multicast segment ID forwarding structure indicated by the next hop index of the outermost multicast segment ID forwarding structure, and taking a node indicated by the first multicast segment ID forwarding structure as a root node of a first independent downstream subtree of the current node;
determining a second multicast segment ID forwarding structure indicated by the sibling index of the multicast segment ID forwarding structure of the root node, and taking a node indicated by the second multicast segment ID forwarding structure as a root node of a next independent downstream subtree of the current node, until the sibling index of the multicast segment ID forwarding structure of the root node is a preset value; and
determining that the multicast segment ID forwarding structure between adjacent root nodes in the multicast segment list is a multicast segment sub-list of an independent downstream subtree to which a previous root node belongs, and updating the next hop index and the sibling index of each multicast segment ID forwarding structure in the multicast segment sub-list.

It should be noted that the term "comprise", "include" or any variant thereof used herein means to be non-exclusive so that a process, method, item or system including a series of elements includes not only said elements, but also other elements not explicitly listed, or inherent elements of such processes, methods, items or systems. In the absence of more limitations, an element defined by "comprising a ..." do not exclude the existence of additional identical elements in the process, method, item or system including the element.

Through the description of the above implementations, those skilled in the art can clearly understand that the method according to the above embodiment may be implemented by means of software plus a necessary general hardware platform. Obviously, it may also be implemented by hardware, but in most cases, the former is preferable. Based on such understanding, the technical solutions of the present disclosure essentially or, in other words, a part thereof contributing to the conventional art, can be embodied in a form of a software product, wherein the software product is stored in a storage medium as described above (such as an ROM/RAM, a disk, or an optical disc) and includes a number of instructions to make a terminal device (which may be a mobile phone, a computer, a server, or a network device, etc.) to execute the methods of the various embodiments of the present disclosure.

The above are merely optional embodiments of the present disclosure, and not intended to limit the scope of the present disclosure, and all equivalent structures or equivalent of processes that may be modified from the contents of the present disclosure and the attached drawings, or directly or indirectly applied to other related technical fields, are also included in the scope of the present disclosure.

## Claims

1. A multicast method in a segment routing label network, wherein the method is applied to an ingress node of the segment routing label network, and the method comprises:
acquiring at least one multicast segment list determined by a topology relationship between nodes in the segment routing label network, wherein one multicast segment list corresponds to one independent downstream subtree of the ingress node, elements in the multicast segment list correspond to nodes in the independent downstream subtree, and the elements in the multicast segment list are represented by a multicast segment ID forwarding structure;
receiving multicast traffic and encapsulating the multicast segment list in the multicast traffic; and
sending the multicast traffic to a node indicated by an outermost multicast segment ID forwarding structure in the multicast segment list, so that the node forwards the multicast traffic based on the multicast segment ID forwarding structure in the multicast segment list.

2. The multicast method in a segment routing label network according to claim 1, wherein acquiring the at least one multicast segment list comprises:
receiving the at least one multicast segment list generated and issued by a controller based on the topology relationship between the nodes of the segment routing label network; or
generating the at least one multicast segment list based on the topology relationship between the nodes of the segment routing label network.

3. The multicast method in a segment routing label network according to claim 1, wherein the multicast segment ID forwarding structure comprises a multicast segment ID, and a next hop index and a sibling index of a node indicated by the multicast segment ID;
the multicast segment ID is configured to indicate a unique network node in the segment routing label network;
the next hop index is configured to indicate a position of the multicast segment ID forwarding structure in the multicast segment list corresponding to the first downstream node in the nodes indicated by the multicast segment ID;
the sibling index is configured to indicate a position of the multicast segment ID forwarding structure in the multicast segment list corresponding to a sibling node having the same parent node as the node indicated by the multicast segment ID; and
the multicast segment ID forwarding structure is configured to instruct a non-ingress node in the segment routing label network to forward the received traffic.

4. A multicast method in a segment routing label network, wherein the method is applied to a non-ingress node of the segment routing label network, and the method comprises:
receiving and parsing a multicast segment list encapsulated in multicast traffic, and determining an outermost multicast segment ID forwarding structure in the multicast segment list, wherein the outermost multicast segment ID forwarding structure comprises an outermost multicast segment ID; and
under the condition that the outermost multicast segment ID is matched with the multicast segment ID of a current node, generating a multicast segment sub-list of an independent downstream subtree of the current node based on the multicast segment ID forwarding structure in the multicast segment list, and encapsulating the multicast segment sub-list in the multicast traffic to be sent to a node indicated by the outermost multicast segment ID in the multicast segment sub-list;
wherein one multicast segment sub-list corresponds to one independent downstream subtree of the current node, elements in the multicast segment sub-list correspond to nodes in the independent downstream subtree, and the elements in the multicast segment sub-list are represented by a multicast segment ID forwarding structure.

5. The multicast method in a segment routing label network according to claim 4, wherein the multicast segment ID forwarding structure comprises a multicast segment ID, and a next hop index and a sibling index of a node indicated by the multicast segment ID;
the multicast segment ID is configured to indicate a unique network node in the segment routing label network;
the next hop index is configured to indicate a position of the multicast segment ID forwarding structure in the multicast segment list corresponding to the first downstream node of the nodes indicated by the multicast segment ID; and
the sibling index is configured to indicate a position of the multicast segment ID forwarding structure in the multicast segment list corresponding to a sibling node having the same parent node as the node indicated by the multicast segment ID.

6. The multicast method in a segment routing label network according to claim 4, wherein after determining the outermost multicast segment ID forwarding structure in the multicast segment list, the method further comprises:
under the condition that the outermost multicast segment ID is not matched with the multicast segment ID of the current node, performing unicast forwarding of the multicast traffic on the node indicated by the outermost multicast segment ID.

7. The multicast method in a segment routing label network according to claim 4, wherein before generating the multicast segment sub-list of the independent downstream subtree of the current node based on the multicast segment ID forwarding structure in the multicast segment list, the method comprises:
under the condition that the next hop index of the outermost multicast segment ID forwarding structure is determined to be a preset value, uploading the multicast traffic to a multicast service for processing; and
under the condition that the next hop index of the outermost multicast segment ID forwarding structure is determined not to be the preset value, generating the multicast segment sub-list of the independent downstream subtree of the current node based on the next hop index and the sibling index of the multicast segment ID forwarding structure in the multicast segment list encapsulated in the multicast traffic.

8. The multicast method in a segment routing label network according to claim 7, wherein generating the multicast segment sub-list of the independent downstream subtree of the current node based on the next hop index and the sibling index of the multicast segment ID forwarding structure in the multicast segment list encapsulated in the multicast traffic comprises:
determining a first multicast segment ID forwarding structure indicated by the next hop index of the outermost multicast segment ID forwarding structure, and taking a node indicated by the first multicast segment ID forwarding structure as a root node of a first independent downstream subtree of the current node;
determining a second multicast segment ID forwarding structure indicated by the sibling index of the multicast segment ID forwarding structure of the root node, and taking a node indicated by the second multicast segment ID forwarding structure as a root node of a next independent downstream subtree of the current node, until the sibling index of the multicast segment ID forwarding structure of the root node is the preset value; and
determining that the multicast segment ID forwarding structure between adjacent root nodes in the multicast segment list is a multicast segment sub-list of an independent downstream subtree to which a previous root node belongs, and updating the next hop index and the sibling index of each multicast segment ID forwarding structure in the multicast segment sub-list.

9. A multicast device in a segment routing label network, comprising: a memory, a processor, and a computer program stored on the memory and executable by the processor, wherein the computer program, when executed by the processor, causes operations of the multicast method in a segment routing label network according to any one of claims 1 to 8 to be implemented.

10. A computer-readable storage medium, wherein the computer-readable storage medium has a computer program stored thereon which, when executed by a processor, causes operations of the multicast method in a segment routing label network according to any one of claims 1 to 8 to be implemented.
